# EUROPÄISCHE PATENTSCHRIFT

(11) **EP 4 380 788 B1**
(45) Veröffentlichungstag und Bekanntmachung des Hinweises auf die Patenterteilung: **11.03.2026**
(21) Anmeldenummer: 22758157.6
(22) Anmeldetag: 26.07.2022
(51) Int. Cl.: B29C 71/00, C08J 7/02, C08J 7/14, B29C 64/35

(54) **CHEMISCHE BEHANDLUNG VON BAUTEILEN**
CHEMICAL TREATMENT OF COMPONENTS
TRAITEMENT CHIMIQUE DE COMPOSANTS

(30) Priorität: 02.08.2021 DE 102021119991
(43) Veröffentlichungstag der Anmeldung: 12.06.2024
(73) Patentinhaber: EOS GmbH Electro Optical Systems, 82152 Krailling (DE)
(72) Erfinder: GALITZ, Verena, 82152 Krailling (DE); FREIHART, Karl, 82110 Germering (DE); FROSCH, Matthias, 97241 Bergtheim (DE)
(74) Vertreter: Meissner Bolte Partnerschaft mbB
(86) Internationale Anmeldenummer: PCT/EP2022/070856
(87) Internationale Veröffentlichungsnummer: WO 2023/011966

(56) Entgegenhaltungen:
- DE-T5- 112014 002 879
- FR-A1- 3 022 250
- US-A1- 2021 114 304
- US-A1- 2021 197 502

## Beschreibung

Die vorliegende Erfindung betrifft Verfahren zur Behandlung von nach einem additiven Fertigungsverfahren hergestellten Objekten, die eine aus einem Polymer mit einer Glasübergangstemperatur von mindestens 120°C gebildete Oberfläche aufweisen oder aus einem solchen Polymer gebildet sind, wobei im Rahmen des Verfahrens die Oberfläche des Objekts mit einem organischen oder anorganischen Lösungsmittel behandelt und in Kontakt gebracht wird. Die vorliegende Erfindung betrifft weiterhin gemäß einem solchen Verfahren hergestellte dreidimensionale Objekte und die Verwendung von organischen oder anorganischen Lösungsmitteln zur Reduzierung der Oberflächenrauigkeit und/oder des E-Moduls und/oder zur Erhöhung der Zugfestigkeit und/oder der Bruchdehnung des Objekts und/oder zur Erhöhung der Chemikalienbeständigkeit.

### Stand der Technik

Im 3D-Druck hergestellte Objekte weisen im Vergleich zur entsprechenden über Spritzguss hergestellten Objekten eine vergleichsweise raue Oberfläche auf, die durch das Herstellungsverfahren bedingt ist. Im Spritzguss wird die Rauigkeit des Objekts durch die Rauigkeit der Form, mit der das Objekt hergestellt wird, bestimmt, so dass es hier leicht möglich ist, sehr glatte und ästhetisch ansprechende Oberflächen zu erzeugen. Im 3D-Druck hergestellte Objekte werden demgegenüber z.B. durch Aufsprühen von aufeinanderfolgenden Schichten, oder durch selektives Schmelzen von Kunststoffpulver im Pulverbett in Bereichen, in denen das spätere Objekt erzeugt wird, hergestellt. Hier kann zwar die Rauigkeit durch die Schichtdicke der einzelnen Schichten beeinflusst werden, aber eine Sichtbarkeit oder zumindest haptische Wahrnehmbarkeit der Schichtstruktur lässt sich auch durch die Verwendung kleiner Schickdicken nicht ganz vermeiden, zumal diese durch die minimal mögliche Verarbeitungsgröße von Kunststoffpulvern oder Filamenten beschränkt ist. Darüber hinaus muss beim 3D-Druck auch ein Kompromiss zwischen Qualität und Geschwindigkeit gefunden werden, der der Vermeidung von Schichtstrukturen praktische Grenzen setzt.

Diese und andere Probleme beim 3D-Druck führen zu Teilen mit einer rauen, gezackten, "pixelierten" Oberfläche, die manchmal sogar porös ist, was optisch oder ästhetisch oft nicht gefällt. Darüber hinaus können solche Oberflächengüten funktionell einschränkend sein, wenn glatte oder undurchlässige Oberflächeneigenschaften ein erforderliches Attribut des 3D-gedruckten Objekts sind. Kleine Lücken und Spalten auf einer Oberfläche von 3D-gedruckten Geräten erschweren oder verhindern beispielsweise die Sterilisation der Oberfläche, da sich Bakterien in die Lücken und Spalten einnisten können. Zudem wirkt sich eine ausgeprägte Schichtstruktur ungünstig auf die mechanischen Eigenschaften des Objekts orthogonal zu der Ebene aus, in die sich die Schichten erstrecken, und die in Folge der Rauigkeit vorliegenden Unebenheiten bilden Ansatzpunkte für auf das Objekt einwirkende Kräfte, die zu einer Beschädigung oder Zerstörung des Objekts führen können. Weiterhin kann durch die raue bis poröse Oberflächenstruktur eine unerwünschte Kerbwirkung entstehen, welche die erzielbaren maximalen Festigkeiten und Dehnungen negativ beeinflussen kann.

Für das Glätten der Oberfläche von 3D-gedruckten Objekten wurden bereits verschiedene Verfahren beschrieben, wie beispielsweise eine mechanische Behandlung (z.B. Schleifen, Polieren), chemische Behandlungen (z.B. erhitzter Acetondampf) oder thermische Behandlungen (z.B. lokalisierte IR oder andere Erwärmung) oder der Auftrag von dickeren Beschichtungen oder Lacken. Die Wirksamkeit solcher Techniken hängt stark von den erforderlichen Oberflächeneigenschaften der resultierenden Oberfläche im Hinblick auf Zeit, Kosten, Haltbarkeit usw. ab. Solche Techniken können nur dazu dienen, das Teil zu glätten, was dann zusätzliche Schritte erfordern kann, um kontrollierte Texturen oder Oberflächenfunktionen zu ermöglichen. In einigen Ausführungsformen kann es wünschenswert sein, die Oberfläche vorläufig zu bearbeiten, bevor ein Film aufgebracht wird, um optimale kosmetische und funktionelle Eigenschaften zu liefern.

Bei der mechanischen Behandlung wird Material von der Oberfläche des Objekts abgetragen, was aus materialökonomischer Sicht nicht unbedingt wünschenswert ist. Zudem können Stellen des Objekts für ein Schleifmittel schwer oder gar nicht erreichbar sein, was Einschränkungen hinsichtlich der Form der entsprechend bearbeitbaren Objekte mit sich bringt.

Die chemische Behandlung, beispielsweise mit Acetondampf, ist für Objekte aus vergleichsweise weichen Kunststoffen wie PLA oder ABS beschreiben. Hier wird die Oberfläche mit Hilfe des Lösungsdampfs soweit erweicht bzw. in einen fluiden Zustand überführt, dass sich durch die wirkenden Oberflächenkräfte eine geglättete Oberfläche ausbilden kann. Problematisch ist hier allerdings, dass sich nur ein eingeschränktes Spektrum an Materialien so glätten lässt, und dass ein zu langes Einwirken oder ein Einwirken von zu viel Lösungsmittel zu unerwünschtem "Bleichen" der Oberfläche oder sogar zu einer Beschädigung des Objekts führen kann.

Bei der thermischen Behandlung stellt die bei Kunststoffen oft nur geringe Wärmeleitfähigkeit ein Problem dar, die dazu führt, dass sich das Objekt ungleichmäßig erwärmt. Dies kann durch sehr langsames Erwärmen ausgeglichen werden, was aber stark zu Lasten der Produktionszeit geht.

Die US 9,908,291 B2 beschreibt ein Verfahren zur Bereitstellung einer geglätteten Oberfläche eines über ein 3D-Druckverfahren erzeugten dreidimensionalen Objekts aus Kunststoff, bei dem zunächst eine größere Rohproduktschicht erzeugt wird und anschließend im Rahmen des Drucks an den Stellen der Oberfläche, die geglättet werden sollen, ein spezielles Filamentmaterial aufgebracht wird.

Die US 10,759,116 B2 beschreibt das Aufbringen einer härtbaren Beschichtung auf ein zunächst über 3D-Druck erzeugtes dreidimensionales Objekt, bei dem überschüssiges Beschichtungsmaterial durch Rotation des Objekts von diesem abgestreift wird, bevor die Beschichtung ausgehärtet wird.

Die US 2021/114304 A1 beschreibt ein Verfahren zur Herstellung von medizinischen Vorrichtungen, bei dem zunächst ein Element über einen additiven Herstellungsprozess hergestellt wird, und dieses Element anschließend mit einem Alkohol in der Gasphase oder in flüssiger Form behandelt wird.

Vor dem Hintergrund des vorstehend geschilderten Standes der Technik besteht ein Bedarf nach einem Verfahren, mit dem die Oberfläche eines Objekts mit einer Kunststoffoberfläche sicher und einfach geglättet werden kann. Insbesondere besteht ein Bedarf für ein Verfahren, mit dem sich durch 3D-Druck oder additive Fertigung hergestellte Kunststoffobjekte, die auf hochtemperaturfesten Polymeren beruhen, schnell, günstig und sicher glätten lassen, und gleichzeitig die mechanischen Eigenschaften verbessert werden können. Die vorliegende Erfindung befasst sich mit diesem Bedarf.

### Beschreibung der Erfindung

In den dieser Erfindung zugrundeliegenden Untersuchungen wurde überraschend festgestellt, dass sich Kunststoffobjekte, die aus einem hochtemperaturfesten Polymer gebildet sind oder zumindest eine aus einem solchen Polymer gebildete Oberfläche aufweisen, durch eine Behandlung mit einem organischen oder anorganischen Lösungsmittel glätten lassen, wobei die Oberfläche mit dem Lösungsmittel beaufschlagt, beispielsweise benetzt oder bedampft wird, und nach kurzer Einwirkungszeit durch z.B. Verdampfen oder Abwaschen wieder von dem Objekt entfernt wird. Die Behandlung mit dem Lösungsmittel ist z.B. gegenüber einem Schleifprozess mit dem Vorteil verbunden, dass das Lösungsmittel auch bei Objekten mit durch die Oberfläche abgeschirmten Stellen alle Oberflächenbereiche des Objekts erreichen und auf diese einwirken kann. Gegenüber einem thermischen Verfahren wird der Vorteil realisiert, dass nicht langsam auf sehr hohe Temperatur erhitzt werden muss, was aus energieökonomischer Sicht und wegen einer möglichen Beschädigung des Objekts bei hohen Temperaturen von Vorteil ist.

Gemäß einem ersten Aspekt betrifft die vorliegende Erfindung demzufolge ein Verfahren zur Behandlung eines nach einem additiven Fertigungsverfahren hergestellten dreidimensionalen Objekts, das das In-Kontakt-Bringen des Objekts mit einem organischen oder anorganischen Lösungsmittel umfasst, wobei mindestens die Oberfläche des Objekts aus einem Polymer gebildet ist, dass eine Glasübergangstemperatur von mindestens 120°C aufweist, wobei das Polymer ausgewählt ist aus Polyphenylensulfiden (PPS), Polyetherimiden (PEI), Polyimiden (PI), Polyamidimiden (PAI), Polyaryletherketonen (PAEK), bevorzugt Polyetheretherketonen (PEEK), Polyetherketonen (PEK), Polyetherketonketonen (PEKK), Polyetherketon-Polyetherdiphenyletherketon (PEK-PEDEK), Polyestern, Polyethern oder Polycarbonaten und das organische oder anorganische Lösungsmittel ausgewählt ist aus einer oder mehreren von konzentrierten und/oder verdünnten Mineralsäuren, konzentrierten organischen Säuren, und aprotischen organischen Lösungsmitteln.

Die Glasübergangstemperatur von mindestens 120°C bedingt, dass es sich bei dem Objekt um ein Objekt mit hoher Dauergebrauchstemperatur handelt. Unterhalb der Glasübergangstemperatur liegt das Material im Glaszustand vor, in dem es sich während des Gebrauchs nicht verformt. Bevorzugt weist das Polymer, aus dem das Objekt gebildet ist, eine Glasübergangstemperatur von mindestens 125°C und/oder höchstens 170°C und besonders bevorzugt von mindestens 130°C und/oder höchstens 160°C auf.

Das Polymer weist zudem bevorzugt eine Dauergebrauchstemperatur, bestimmt als Wärmeformbeständigkeit gemäß ISO 75 HDT/A (1,8 MPa), von mindestens 140°C und besonders bevorzugt mindestens 150°C auf.

Das "organische oder anorganische Lösungsmittel" ist im Kontext der hier beschriebenen Erfindung ein bei Umgebungstemperatur (etwa 20°C) flüssiges Medium, dass mit dem Polymer interagieren kann, z.B. in dem es das Polymer löst, anätzt (partielle Zersetzung an der Oberfläche) oder im Sinne eines Quellens in das Polymer eindringt und so die Mobilität der Polymerketten erhöht oder eine Kristallisation der Polymerketten begünstigt. Weist das Objekt an seiner Oberfläche ein Gemisch an Polymeren auf, so ist es ausreichend wenn das Lösungsmittel mit einem dieser Polymere in der angegebenen Form interagiert. Ebenso kann bei einem Blockcopolymer oder einem Copolymer mit inhomogener Verteilung der Monomere eine Interaktion in der angegebenen Weise mit nur einem Block des Blockcopolymers oder dem mit dem Lösungsmittel besser verträglichen Teil des Copolymers erfolgen. In diesen Fällen kommt es meist zu einem Quellen des Polymers.

Im Rahmen des angegebenen Verfahrens soll ein nach einem additiven Fertigungsverfahren hergestelltes dreidimensionales Objekt behandelt werden. Ein solches Objekt weist regelmäßig eine deutliche Oberflächenrauigkeit auf, beispielsweise eine Rauigkeit von mindestens 20 µm und bevorzugt mindesten 25 µm (bestimmt als Mittenrauwert gemäß DIN EN ISO 4287:2010). Darüber hinaus kann ein über ein additives Fertigungsverfahren hergestelltes dreidimensionales Objekt dadurch von konventionell (beispielsweise durch Spritzguss) hergestellten Objekten unterschieden werden, dass es, zumindest bei mikroskopischer Betrachtung von Schnitten durch das Objekt, eine erkennbare Schichtstruktur aufweist, die aus dem Aufbau des Objekts "Schicht um Schicht" im additiven Fertigungsverfahren resultiert.

Das additive Festigungsverfahren, das zur Herstellung des Objekts verwendet wurde, ist auf der anderen Seite nicht von relevanter Bedeutung für das Verfahren. Entsprechende Objekte können, ohne darauf beschränkt zu sein, herstellt werden durch selektives Lasersintern oder selektives Laserschmelzen, wobei ein pulverförmiges Ausgangsmaterial als Pulverbett vorgelegt wird und die Stellen in der Schicht, die in das Objekt einbezogen werden sollen, können durch Einwirkung von elektromagnetischer Strahlung erhitzt und verflüssigt werden. Das Objekt wird dann infolge des Erkaltens des Material, bei dem Schicht um Schicht weiteres Material angelagert wird, aufgebaut. Ebenso kann es sich bei dem Objekt um ein durch Fused Deposition Modeling (FDM) hergestelltes Objekt handeln, bei dem ein Filament als Ausgangsmetrial verwendet wird, und bei dem geschmolzenes Filament mit Hilfe einer Düse an die Stellen des späteren Objekts gesprüht wird, hergestellt werden.

Darüber hinaus kann das Objekt über ein Verfahren hergestellt werden, bei dem ein Kunststoffpulver als Ausgangsmaterial verwendet wird, und verfestigt wird, indem eine Tinte (als "Fusing agent") auf die Teile der Schicht, in denen das Objekt später erzeugt werden soll, aufgetragen und durch anschließendes Bestrahlen der Oberfläche der Schicht mit einer zweidimensionalen Lichtquelle einer Wellenlänge, die nur von Bestandteilen der Tinte aufgenommen wird, verfestigt wird. Auf diese Weise wird das mit der Tinte "markierte" Kunststoffmaterial punktuell aufgeschmolzen und kann sich anschließend zum dreidimensionalen Objekt verfestigen. Ein solches Verfahren wird von der Firma HP als "Multi Jet Fusion" kommerziell vermarktet. Bei einem ähnlich wirkenden Verfahren, das auch als "binder jetting" bezeichnet wird, wird ein Bindemittel auf die Teile der Schicht eines Kunststoffpulverbetts aufgebracht, in denen das Objekt später erzeugt werden soll, und das Objekt wird erzeugt, in dem sich das Bindemittel verfestigt.

Weitere Verfahren, mit denen das Objekt hergestellt werden kann, beinhalten Multijet-Modellierung (wobei ein flüssiges, lichtempfindliches Kunststoffmaterial mittels eines Druckkopfes auf eine Plattform aufgebracht und mittels einer Strahlungsquelle ausgehärtet wird, die in den Druckkopf integriert ist), Filmtransferimaging (von 3D-Systeme), Elektrofotografisches (EP) Imaging und Abscheidung (von Evolve Additive-Lösungen) oder jede andere Technologie, die für den 3D-Druck beschrieben wurde.

Allen diesen Verfahren ist gemein, dass Objekte mit zumindest mikroskopisch feststellbarer Schichtstruktur erhalten werden. Das "nach einem additiven Fertigungsverfahren hergestellte dreidimensionale Objekt", das über das erfindungsgemäße Verfahren hergestellt wurde, weist entsprechend eine solche Struktur auf.

In einer bevorzugten Ausführungsform ist das im Rahmen des erfindungsgemäßen Verfahrens mit dem Lösungsmittel in Kontakt gebrachte Objekt ganz aus dem angegebenen Polymer gebildet, d.h. dass das Objekt als Polymer nur Polymer mit einer Glasübergangstemperatur von mindestens 120°C enthält. Neben dem Polymer können allerdings noch weitere Komponenten, wie z.B. Füllstoffe, vorliegen.

In Folge des In-Kontakt-Bringens des Objekts mit dem organischen oder anorganischen Lösungsmittel kann es zu einer Wechselwirkung des Lösungsmittels mit dem Polymer in der Weise kommen, dass das Polymer quillt oder teilweise gelöst wird, während der innere Bereich des Objekts im plastisch stabilen Zustand und vorzugsweise mindestens teilweise im glasförmigen Zustand (T_{Objekt} < Tg) verbleibt. Die Oberfläche des Objekts wird so verformbar, wobei Oberflächenspannungseffekte zu einer Verminderung der Rauigkeit führen, und ggf. vorhandene Poren geschlossen werden. Die so erzeugte geglättete Oberfläche verhindert oder vermindert im Weiteren das Eindringen von Fremdstoffen in das Objekt.

Je nach Einwirkdauer kann durch die Einwirkung des Lösungsmittels auch eine verbesserte Verbindung der Schichten im Objekt realisiert werden, was sich in verbesserten mechanischen Eigenschaften im Vergleich zum Objekt vor der Behandlung zeigt. Schließlich kann das Lösungsmittel auch mikroskopische Lagenänderungen oder andere Anordnung der Polymerketten bewirken, die z.B. eine höhere Kristallisation des Polymers begünstigen können. Dies kann sich dann makroskopisch in einer höheren Festigkeit und/oder Chemikalienbeständigkeit des Objekts auswirken.

Das In-Kontakt-Bringen des Objekts erfolgt im Rahmen des hier beschriebenen Verfahrens bevorzugt für einen Zeitraum, der geeignet ist um die Oberflächenrauigkeit Ra, bestimmt als Mittenrauwert nach DIN EN ISO 4287:2010, um mindestens 5% und bevorzugt mindestens 10% gegenüber der Oberflächenrauigkeit des Objekts vor der Behandlung zu reduzieren. In diesem Zusammenhang wird darauf hingewiesen, dass die Veränderung der Oberflächenrauigkeit stark von Parametern wie der Temperatur, dem Polymer und dem Lösungsmittel abhängt, mit dem das Objekt behandelt wird, so dass sinnvolle Zeitvorgaben schwer möglich sind. Der Fachmann ist jedoch über eine einfache Testreihe in der Lage, einen geeigneten Zeitraum für ein Parameterset von Temperatur, Polymer und Lösungsmittel zu bestimmen. Beispielhaft wurde im Rahmen einer Versuchsreihe eine Verminderung von mehr als 10 % der Oberflächenrauigkeit des Objekts vor der Behandlung für ein Objekt aus PEKK durch eine Behandlung mit konzentrierter H₂SO₄ bei 23°C von weniger als 1 Minute, bei einer Behandlung mit THF bei 23°C von mehr als 30 Minuten und bei einer Behandlung mit N-Methylpyrrolidon bei 23°C von mindestens 5 Minuten erreicht.

Alternativ oder zusätzlich dazu ist es bevorzugt, wenn das In-Kontakt-Bringen für einen Zeitraum erfolgt, der ausreichend ist um die Zugfestigkeit und/oder die Bruchdehnung, bestimmt gemäß DIN ISO 527-1, um mindestens 5% und bevorzugt mindestens 10% gegenüber dem Objekt vor der Behandlung zu erhöhen und/oder den E-Modul um mindestens 5% gegenüber dem Objekt vor der Behandlung zu vermindern. Da sich auch in diesem Fall Abhängigkeiten des Zeitraums von dem zugrundeliegenden Polymer, dem Lösungsmittel und der Temperatur ergeben, ist ein geeigneter Zeitraum für ein jeweiliges Set dieser Parameter für den Fachmann anhand einer einfachen Versuchsreihe zu bestimmen.

In Einzelfällen kann sich durch die Behandlung mit dem Lösungsmittel auch eine Erhöhung des E-Moduls ergeben, beispielsweise, in dem die Lösungsmittelbehandlung eine stärkere Kristallisation des Polymers induziert. In solchen Fällen ist es bevorzugt, wenn das In-Kontakt-Bringen für einen Zeitraum erfolgt, der ausreichend ist um den E-Modul, bestimmt gemäß DIN ISO 527-1, um mindestens 2% und bevorzugt mindestens 5% gegenüber dem Objekt vor der Behandlung zu erhöhen.

Trotz der erwähnten Abhängigkeit ist es bevorzugt, wenn der Zeitraum des In-Kontakt-Bringens mindestens 10 Sekunden und/oder höchstens 240 Minuten und bevorzugt mindestens 30 Sekunden und/oder höchstens 180 Minuten beträgt. Wird als Lösungsmittel eine Mineralsäure eingesetzt, kann der Zeitraum relativ kurz gewählt werden, z.B. 40 Sekunden bis maximal 20 Minuten und bevorzugt mindestens 60 Sekunden und/oder höchstens 15 Minuten. Wird als Lösungsmittel ein organisches aprotisches Lösungsmittel eingesetzt, ist zur Erzielung einer gewünschten Glättung und/oder zur Modifizierung der Zugfestigkeit und/oder der Bruchdehnung und/oder des E-Moduls meist eine längere Behandlungsdauer erforderlich, z.B. ein Zeitraum von 3 bis 180 Minuten und bevorzugt mindestens 5 Minuten und/oder höchstens 60 Minuten.

Das In-Kontakt-Bringen des Objekts mit dem Lösungsmittel kann bei jeder Temperatur erfolgen, bei der das Lösungsmittel in flüssiger oder gasförmiger Form vorliegt, wobei die Temperatur nicht oberhalb der Schmelztemperatur und bevorzugt nicht oberhalb der Glasübergangstemperatur des Polymers liegen sollte um Verformungen des Objekts (mit Ausnahme der gewünschten Oberflächenglättung) zu vermeiden. Als geeignetes Temperaturfenster für das In-Kontakt-Bringen kann ein Temperaturbereich von 15°C bis 220°C, bevorzugt mindestens 20°C und/oder höchstens 180°C angegeben werden.

In einer bevorzugten Ausführungsform erfolgt das In-Kontakt-Bringen bei Umgebungstemperatur (etwa 20°C). In einer anderen bevorzugten Ausführungsform erfolgt das In-Kontakt-Bringen bei erhöhter Temperatur, beispielsweise bei einer Temperatur im Bereich von 30 bis 220°C und bevorzugt mindestens 60°C und/oder höchstens 180°C. Lösungsmittel, mit denen Temperaturen von über 100 °C erreicht werden können, sind z.B. N-Methylpyrrolidon (Siedetemperatur 202 °C) und Dimethylacetamid (Siedetemperatur 165 °C). Mit diesen oder anderen Lösungsmitteln ist auch eine Behandlung mit flüssigem Lösungsmittel bei Temperaturen oberhalb des Siedepunkts bei Normaldruck möglich, indem die Behandlung bei erhöhtem Druck durchgeführt wird.

Bei einer Behandlung von Objekten bei den genannten Temperaturen, ist darauf zu achten, dass die Behandlungstemperatur die Glasübergangstemperatur Tg des Polymers nicht übersteigt. Bevorzugt ist es, wenn die Behandlungstemperatur mindestens 10°C und besonders bevorzugt mindestens 15°C niedriger ist als die Glasübergangstemperatur Tg des Polymers. Bei Polymerblends oder Blockcopolymeren, die mehrere Phasen mit unterschiedlichen Glasübergangstemperaturen aufweisen, ist für die Bestimmung der Behandlungstemperatur auf die jeweils niedrigste Glasübergangstemperatur abzustellen.

Das In-Kontakt-Bringen erfolgt bei Normaldruck (1013 hPa) oder erhöhtem Druck (> 1013 hPa). Falls das In-Kontakt-Bringen bei erhöhtem Druck erfolgt, sollte der

Druck 250 bar nicht übersteigen und bevorzugt bei maximal 50 bar, und insbesondere maximal 5 bar liegen. Vorzugsweise erfolgt das In-Kontakt-Bringen bei Normaldruck. Alternativ kann das In-Kontakt-Bringen auch bei einem Druck unterhalb von 1013 hPa erfolgen, wie beispielsweise einem Druck im Bereich von 100 bis 800 hPa.

In einer bevorzugten Ausführungsform erfolgt das In-Kontakt-Bringen bei Umgebungstemperatur durch Eintauchen bei Normaldruck oder erhöhtem Druck und bevorzugt bei Normaldruck.

In einer anderen bevorzugten Ausführungsform erfolgt das In-Kontakt-Bringen bei erhöhter Temperatur durch Eintauchen bei Normaldruck oder erhöhtem Druck, wobei die Temperatur geringer ist als der Siedepunkt des Lösungsmittels und der Schmelztemperatur des Polymers. Bevorzugt erfolgt das In-Kontakt-Bringen in dieser Ausführungsform bei Normaldruck.

In einer noch weiteren bevorzugten Ausführungsform erfolgt das In-Kontakt-Bringen bei erhöhter Temperatur in Gegenwart von dampfförmigem Lösungsmittel bei Normaldruck oder erhöhtem Druck. Auch für diese Ausführungsform ist es bevorzugt, wenn das In-Kontakt-Bringen bei Normaldruck erfolgt. Diese Ausführungsform lässt sich beispielsweise durch Bedampfen des Objekts mit dem Lösungsmittel erzeugen, wobei das Lösungsmittel thermisch verdampft oder unter dem Einfluss von Ultraschall verdampft oder vernebelt werden kann.

Gemäß der Erfindung ist das Polymer ausgewählt aus Homo- oder Copolymere oder Polyblends umfassend einen oder mehrere ausgewählt aus Polysulfonen (PSU), bevorzugt Polyarylensulfonen (PAS), Polyarylethersulfonen (PAES), Polyethersulfonen (PES), Polyarylensulfiden, bevorzugt Polyphenylensulfiden (PPS), Polyetherimiden (PEI), Polyimiden (PI), Polyamidimiden (PAI), Polyaryletherketonen (PAEK), bevorzugt Polyetheretherketonen (PEEK), Polyetherketonen (PEK), Polyetherketonketonen (PEKK), Polyetherketon-Polyetherdiphenyletherketon (PEK-PEDEK), Polyestern, Polyethern oder Polycarbonaten. Ein ganz besonders bevorzugtes Polymer ist Polyetheretherketon (PEEK) und Polyetherimid (PEI), bevorzugt ist es entsprechend, wenn das Polymer des dreidimensionalen Objekts mehr als 50 Gew.-% (bezogen auf die Gesamtmenge an Polymer) an PEKK oder PEI enthält und ganz besonders bevorzugt ist es, wenn das Polymer des dreidimensionalen Objekts nur PEKK oder PEI als Polymer enthält.

Neben dem Polymer kann das dreidimensionale Objekt noch andere üblicherweise in durch additive Fertigung hergestellten Objekten enthaltene Bestandteile enthalten, wie Fließmittel, Antiagglomerationsmittel, Reflexionspartikel und/oder Pigmente. Eine geeignete Art von Reflexionspartikeln umfasst beispielsweise TiO₂. Ein geeignetes Fließmittel und/oder Antiagglomerationsmittel ist z.B. Ruß oder pyrogene Kieselsäure. Ein besonders bevorzugter Additivtyp, der verwendet werden kann um Absorptionseigenschaften bei einer Wellenlänge zu verleihen, bei der die Polymermaterialien kein Licht absorbieren, sind IR- oder NIR-Strahlung absorbierende Materialien, wie die in WO 2020/099236 A1 beschriebenen Rußtypen. Darüber hinaus kann das dreidimensionale Objekt typische in technischen Polymeren enthaltene Stabilisatoren (z.B. Antioxidantien und UV-Stabilisatoren), Kettenwachstumsbegrenzer und/oder andere Additive zur Steuerung der Polymerisationsreaktion (z.B. saure Puffersysteme), funktionelle Additive (z.B. Flammschutzmittel) und/oder beabsichtigte oder unbeabsichtigte Verunreinigungen aus Polymerisations- oder Pulverisierungsprozessen (z.B. Katalysatoren, Verträglichkeitsvermittler, Verarbeitungshilfsmittel) enthalten.

Zudem kann das dreidimensionale Objekt Füllstoffe, z.B. in Form von Fasern (insbesondere Carbonfasern), Glaskugeln, die gegebenenfalls hohl sein können, oder Metall- und insbesondere Aluminiumpartikeln enthalten. Solche Füllstoffe können z.B. in einer Menge von bis zu 60 Gew.-% oder im Bereich von 30 Gew.-% bis 55 Gew.-% in dem Objekt enthalten sein. In diesem Fall beträgt der Gehalt des Polymers in dem dreidimensionalen Objekt vorzugsweise mindestens 85 Gew.-%, bevorzugter mindestens 90 Gew.-% und noch bevorzugter mindestens 95 Gew.-% des nicht durch Füllstoffe bereitgestellten Anteils an Materialien, aus denen das Objekt gebildet ist.

Das anorganische oder organische Lösungsmittel im erfindungsgemäßen Verfahren ist eine verdünnte oder konzentrierte Mineralsäure oder ist eine konzentrierte organische Säure, oder ist ein aprotisches organsiches Lösungsmittel. Bevorzugte Mineralsäuren sind beispielsweise Schwefelsäure oder Salpetersäure. Bevorzugte organische Säuren sind insbesondere Säuren mit einem pKs von 4,8 oder weniger und bevorzugt Säuren mit einem pKs von 2 oder weniger. Eine geeignete Säure mit einem pKs von 4,8 oder weniger ist z.B. Essigsäure. Geeignete Säuren mit einem pKs von 2 oder weniger sind z.B. fluorierte Carbonsäuren wie insbesondere Trifluoressigsäure oder Trifluormethansulfonsäure. Säuren als Lösungsmittel sind insbesondere in Kombination mit säureempfindlichen Polymeren wie Polyethern, Polyestern oder Polyamiden bevorzugt.

In einer besonders bevorzugten Ausführungsform ist das Lösungsmittel Schwefelsäure mit einer Konzentration von mindestens 70 % und das Polymer ist oder enthält eines von PEKK, PEK, PEEK oder PEI.

In einer anderen bevorzugten Ausführungsform wird als Lösungsmittel eine konzentrierte oder verdünnte Lauge, z.B. in Form von Natronlauge oder Kalilauge in das Verfahren einbezogen.

In einer noch weiteren bevorzugten Ausführungsform wird als Lösungsmittel im erfindungsgemäßen Verfahren ein aprotisches organisches Lösungsmittel verwendet, dass zweckmäßig einen Hildebrand Löslichkeitsparameter δ im Bereich von 18 bis 24 aufweist. Besonders geeignete Lösungsmittel, die diese Vorgabe erfüllen, sind Tetrahydrofuran (THF), Dichlormethan, N-Methylpyrrolidon (NMP), Dimethylacetamid (DMAc) oder Dibrommethan. Ein insbesondere bevorzugtes aprotisches organisches Lösungsmittel ist THF. Lösungsmittel mit einem Hildebrand Löslichkeitsparameter δ von 18 bis 24 sind insbesondere in Kombination mit Polyetherpolymeren wie PEK, PEKK oder PEEK vorteilhaft, die einen ähnlichen Hildebrand Löslichkeitsparameter und damit eine ähnliche Polarität wie das Lösungsmittel aufweisen.

Das Verfahren kann besonders vorteilhaft ausgestaltet werden, indem die Behandlung des Objekts in mehreren Stufen mit verschiedenen Lösemitteln erfolgt. Besonders bevorzugt ist dabei eine Behandlung in einer ersten Stufe, in der die Oberfläche des Objekts mit einer konzentrierten oder verdünnten Mineralsäure geglättet wird, und die Behandlung in einer anschließenden zweiten Stufe, bei der ein kristallisierend wirkendes organisches Lösemittel verwendet wird.

Eine kristallisierende Wirkung des organischen Lösungsmittels auf das Polymer des Objekts lässt sich in der Regele über den E-Modul ableiten, der infolge eines höheren kristallinen Polymeranteils gegenüber dem Objekt vor der Behandlung ansteigt. Alternativ kann eine "kristallisierende Wirkung" eines Lösungsmittels auf ein Polymer mittels DSC oder WAXS bestimmt werden, in denen sich eine höhere Kristallinität durch ausgeprägtere Schmelzübergänge (Peaks) zeigt. Beispielhaft als kristallisierend wirkende Lösungsmittel zu nennen sind unter anderem Tetrahydrofuran, Dichlormethan oder Dibrommethan.

Um nach dem In-Kontakt-Bringen unerwünschte Reste des Lösungsmittels von dem behandelten Objekt zu entfernen ist es zweckmäßig, das dreidimensionale Objekt nach der Behandlung mit dem organischen oder anorganischen Lösungsmittel mit Wasser und ggf. einem wassermischbaren organischen Lösungsmittel mit einem Siedepunkt von unter 100°C zu waschen. Als geeignete Lösungsmittel zum Waschen kommen hier insbesondere niedere Alkohole (C₁-C₆), bevorzugt Ethanol, und niedere Ketone (C₁-C₆), insbesondere in Form von Aceton in Betracht. Anschließend kann das Objekt getrocknet werden. Abhängig von dem verwendeten Lösungsmittel der Behandlung können Reste desselben aber gegebenenfalls auch durch eine Behandlung unter reduziertem Druck/Vakuum entfernt werden. Durch die Entfernung des Lösungsmittels wird sichergestellt, dass das eingesetzte Lösungsmittel im Objekt nicht weichmachend wirken kann, so dass optimale mechanische Eigenschaften erhalten werden. Zudem wird so vermieden, dass das Lösungsmittel im späteren Gebrauch des Objekts freigesetzt wird, wo es zu Geruchsbelästigungen führen kann.

In einem weiteren Aspekt betrifft die vorliegende Erfindung ein Verfahren zur Herstellung eines dreidimensionalen Objekts umfassend i) das Herstellen des dreidimensionalen Objekts durch selektives Verfestigen eines pulverförmigen Aufbaumaterials an den dem Querschnitt des dreidimensionalen Objekts in der jeweiligen Schicht entsprechenden Stellen durch Einwirkung von elektromagnetischer Strahlung, wobei als Aufbaumaterial ein Kunststoffpulver verwendet wird, das auf einem Polymer mit einer Glasübergangstemperatur von mindestens 120°C beruht, oder das Herstellen des dreidimensionalen Objekts aus einem Filament als Ausgangsmaterial, wobei geschmolzenes Filament eines solchen Polymers mit Hilfe einer Düse an die Stellen des späteren Objekts gesprüht wird, und ii) das anschließende Behandeln des Objekts durch In-Kontakt-Bringen des Objekts mit einem organischen oder anorganischen Lösungsmittel, wobei das dreidimensionales Objekt aus einem Polymer hergestellt wird, das ausgewählt ist aus Polyphenylensulfiden (PPS), Polyetherimiden (PEI), Polyimiden (PI), Polyamidimiden (PAI), Polyaryletherketonen (PAEK), bevorzugt Polyetheretherketonen (PEEK), Polyetherketonen (PEK), Polyetherketonketonen (PEKK), Polyetherketon-Polyetherdiphenyletherketon (PEK-PEDEK), Polyestern, Polyethern oder Polycarbonaten, und das organische oder anorganische Lösungsmittel ausgewählt ist aus einer oder mehreren von konzentrierten und/oder verdünnten Mineralsäuren, konzentrierten organischen Säuren, und aprotischen organischen Lösungsmitteln. Für bevorzugte Ausgestaltungen des Schritts ii) wird auf die vorstehenden Ausführungen zu bevorzugten Ausgestaltungen des Verfahrens gemäß dem ersten Aspekt verweisen.

Ein Verfahren zum Herstellen des dreidimensionalen Objekts durch selektives Verfestigen eines pulverförmigen Aufbaumaterials, das im Schritt i) verwendet werden kann, ist beispielsweise ein Verfahren wie es aus der DE 44 10 046 bekannt ist. In einem solchen Verfahren wird ein dreidimensionales Objekt schichtweise - nach dem Prinzip des "additive Manufacturing" - durch Auftragen von Pulverschichten und Verbinden dieser Schichten miteinander durch selektives Verfestigen des Pulvers an den den Querschnitten des Objekts entsprechenden Stellen hergestellt. Andere geeignete Verfahren zur Herstellung des dreidimensionalen Objekts durch selektives Verfestigen eines pulverförmigen Aufbaumaterials sind die weiter oben angegebenen Verfahren.

In einem noch weiteren Aspekt betrifft die vorliegende Erfindung ein dreidimensionales Objekt, das nach einem wie vorstehend beschriebenen Verfahren hergestellt wurde. Von konventionell hergestellten Objekten ist ein solches Objekt durch die inhomogene Schichtstruktur unterscheidbar, die in größerem Abstand von der Oberfläche des Objekts mikroskopisch in einem Querschnitt noch erkennbar ist, während sie an der Oberfläche des Objekts in Folge der Einwirkung des Lösungsmittels nicht mehr wahrnehmbar sein kann.

Bevorzugt weist das Objekt gemäß diesem Aspekt der Erfindung eine Oberflächenrauigkeit Ra gemäß DIN EN ISO 4287:2010 von weniger als weniger als 20 µm, bevorzugt weniger als 15 µm, weiter bevorzugt weniger als 10 µm, noch weiter bevorzugt weniger als 8 µm und noch weiter bevorzugt weniger als 5 µm auf. Da die Rauigkeit der Oberfläche stark von Fertigungsverfahren, Werkstoffeigenschaften, Prozessparametern und Bauteilorientierungen abhängig ist, ist dieser Wert basierend auf den üblichen Kenngrößen für Objekte, die mittels Powder Bed Fusion (PBF) für Z-orientierte (d.h. senkrecht zur Bauebene stehende) Oberflächen bei üblichen Verarbeitungsparametern (Schichtdicken, Belichtungsparameter, etc.) gefertigt werden, zu bestimmen. Andere Additive Fertigungsverfahren (z.B. Materialextrusionsverfahren) sowie abgewandelte Prozessparameter (insbesondere geringere Schichtdicken, Belichtungsparameter, etc.) können aufgrund der prozesseigenen Besonderheiten über dem Herstellungsprozess deutlich höhere oder geringere Rauigkeiten erreichen. Dementsprechend können auch die erreichbaren Rauigkeiten nach Behandlung relevant abweichen. Wirkungsweise und Effekt auf die Bauteileigenschaften ist dennoch entsprechend dieser Erfindung bevorzugt.

In einem noch weiteren Aspekt betrifft die vorliegende Erfindung die Verwendung einer Behandlung, bei der ein über ein additives Fertigungsverfahren hergestelltes dreidimensionales Objekt mit einem organischen oder anorganischen Lösungsmittel in Kontakt gebracht wird, zur Reduzierung der Oberflächenrauigkeit und/ oder des E-Moduls und/oder zur Erhöhung der Zugfestigkeit und/oder der Bruchdehnung des Objekts und/oder zur Erhöhung der Chemikalienbeständigkeit, wobei das Objekt aus eine aus einem Polymer mit einer Glasübergangstemperatur von mindestens 120°C gebildete Oberfläche aufweist, wobei das dreidimensionales Objekt aus einem Polymer gebildet ist, das ausgewählt ist aus Polyphenylensulfiden (PPS), Polyetherimiden (PEI), Polyimiden (PI), Polyamidimiden (PAI), Polyaryletherketonen (PAEK), bevorzugt Polyetheretherketonen (PEEK), Polyetherketonen (PEK), Polyetherketonketonen (PEKK), Polyetherketon-Polyetherdiphenyletherketon (PEK-PEDEK), Polyestern, Polyethern oder Polycarbonaten, und das organische oder anorganische Lösungsmittel ausgewählt ist aus einer oder mehreren von konzentrierten und/oder verdünnten Mineralsäuren, konzentrierten organischen Säuren, und aprotischen organischen Lösungsmitteln, und bevorzugt aus einem solchen Polymer, ggf. unter Einbezug von weiteren nicht polymerischen Komponenten, gebildet ist. Eine verbesserte Chemikalienbeständigkeit kann beispielsweise gemäß DIN EN ISO 175 bestimmt werden, wobei die Veränderung der Masse, Maße, Ausdehnung und Oberflächenveränderungen nach einer Lagerung des Objekts in der Chemikalie nach einem Zeitraum von 24 h bestimmt wird. Alternativ korreliert eine bessere Chemikalienbeständigkeit mit einem höheren Anteil an Kristallinität im Polymer oder zumindest im Polymer an der Oberfläche des Objekts, die mit Hilfe von DSC oder WAXS bestimmt werden kann. Die Oberflächenrauigkeit und die mechanischen Eigenschaften sind hier jeweils mittels der im Vorstehenden angegebenen Prüfungsverfahren zu bestimmen.

Im Zusammenhang mit den obigen Aspekten ist anzumerken, dass jede oben beschriebene bevorzugte Ausführungsform für einen Aspekt gleichermaßen als bevorzugte Ausführungsform der anderen Aspekte beschrieben wird, auch wenn die Kombination aus Gründen der gebotenen Knappheit oben nicht explizit angegeben wird. Darüber hinaus gilt jede Kombination von mehr oder weniger bevorzugten Ausführungsformen eines Aspekts, sowie jede Kombination von mehr oder weniger bevorzugten Ausführungsformen eines Aspekts mit jedem anderen Aspekt, wie hier oben beschrieben, als erfindungsgemäß beschrieben.

Im Rahmen der vorliegenden Erfindung haben die Begriffe "umfassend" oder "enthaltend" und deren grammatikalische Modifikationen folgende Bedeutung: In einer Ausführungsform können neben den genannten Elementen weitere Elemente enthalten sein. In einer anderen Ausführungsform sind im Wesentlichen nur die genannten Elemente enthalten. Mit anderen Worten können die Begriffe zusätzlich zu ihrer herkömmlichen Bedeutung in einer bestimmten Ausführungsform synonym mit den Begriffen "im Wesentlichen bestehend aus" oder "bestehend aus" sein.

Im Folgenden wird die vorliegende Erfindung anhand einiger Ausführungsbeispiele näher illustriert, die jedoch nicht in irgendeiner Weise als beschränkend für den Schutzumfang der Anmeldung aufzufassen sind.

### Beispiel 1:

Über 3D-Druck mit einem Lasersinter-System EOS P810 hergestellte Standardprüfkörper (gemäß ASTM D638-14, Typ I) in ZXY-Orientierung aus Carbonfaserverstärktem PEKK (Handelsname ALM HT-23) wurden für die in Tabelle 1 angegebenen Zeit bei Raumtemperatur mit den in der Tabelle angegebenen Lösungsmitteln behandelt. Anschließend wurde überschüssiges Lösungsmittel entfernt, die Prüfkörper wurden mit Wasser und (im Fall von NMP und DMAc zusätzlich mit Aceton) gewaschen und die Prüfkörper wurden unter Luftatmosphäre für > 12h bei Raumtemperatur getrocknet.

Für die so behandelten Prüfkörper wurden die Rauigkeit (bestimmt als Mittenrauwert Rₐ gemäß DIN EN ISO 4287:2010), der E-Modul, die Zugfestigkeit (UTS) und die Bruchdehnung (jeweils nach ASTM D638-14) bestimmt. Die Ergebnisse dieser Messungen sind ebenfalls in Tabelle 1 angegeben. Probe 1 ist ein Vergleichsbeispiel, das keiner Lösungsmittelbehandlung unterzogen wurde.

**Tabelle 1:**

| Probe | Behandlungsmittel | Behandlungs-zeit [Min] | Rauigkeit [µm] | E-Modul [MPa] | UTS [MPa] | Bruchdehnung [%] |
|---|---|---|---|---|---|---|
| 1 | - | - | 25,1 | 5820 | 63 | 1,12 |
| 2 | H₂SO₄ | 1 | 5,4 | 5740 | 70 | 1,32 |
| 3 | H₂SO₄ | 5 | 5,4 | 5480 | 72,5 | 1,48 |
| 4 | H₂SO₄ | 10 | 3,8 | 5460 | 74,6 | 1,53 |
| 5 | THF | 15 | 24,5 | 5900 | 60 | 1,1 |
| 6 | THF | 60 | 22,3 | 4950 | 65,5 | 1,42 |
| 7 | NMP | 5 | 22,3 | 5760 | 67 | 1,28 |
| 8 | NMP | 60 | 23,2 | 5660 | 64 | 1,18 |
| 9 | NMP | 180 | 22,9 | 5800 | 63,5 | 1,15 |
| 10 | DMAc | 15 | 23,4 | 5500 | 66,5 | 1,30 |

Wie aus Tabelle 1 ersichtlich wird, kann eine Behandlung mit konzentrierter Schwefelsäure (H₂SO₄) die Rauigkeit des Objekts deutlich reduzieren. Nach der Behandlung lassen sich ebenfalls verbesserte mechanische Kennwerte in Form einer gesteigerten Zugfestigkeit und Bruchdehnung und ein verringerter E-Modul beobachten. Die mit THF (= Tetrahydrofuran) behandelten Proben zeigten eine geringere Verbesserung der Rauigkeit und bei längerer Behandlungszeit (60 Min) eine gesteigerte Zugfestigkeit und Bruchdehnung. Bei den mit NMP behandelten Proben war analog eine geringe Verbesserung der Rauigkeit und bei kürzerer Behandlungszeit eine Erhöhung von Bruchdehnung und Zugfestigkeit zu beobachten.

### Beispiel 2:

Zugstäbe gemäße DIN EN ISO 527-2, Typ 1BA, aus Polyetherketonketon-Pulver (PEKK, basierend auf der Kepstan 6000 Serie von Arkema) bzw. Carbonfaser-gefülltem PEKK-Pulver (PEKK-CF, Handelsbezeichnung: ALM HT-23) wurden mittels schichtweiser, regioselektiver Verfestigung auf einem Lasersinter-System EOS P810 in ZXY-Orientierung hergestellt. Zusätzlich wurden quaderförmige Prüfkörper zur Ermittlung der Oberflächenrauigkeit, ebenfalls in ZXY-Orientierung, hergestellt.

Die Bauteile wurden in konzentrierter Schwefelsäure (96% bzw. 80%) bei Raumtemperatur (RT, ~23°C) bzw. erhöhter Temperatur (60°C) für jeweils 1, 5, 10 und 15 Minuten bei Umgebungsdruck durch Eintauchen und ständigem Rühren der Schwefelsäure behandelt. Nach Ablauf der Behandlungsdauer wurden die Prüfkörper in Wasser abgewaschen und anschließend für mindestens 12 Stunden in Wasser gelagert, um verbleibende Säurerückstände weitestgehend zu extrahieren. Im Anschluss wurden die Prüfkörper für mindestens 12 Stunden in einem Vakuumofen bei 120°C, unter Durchfluss von trockenem Stickstoff bei einem Absolutdruck von 220 bis 280mbar im System getrocknet.

Die Zugstäbe wurden gemäß DIN EN ISO 527-1 geprüft. Jeder Messwert wurde als Mittel von fünf Einzelmessungen bestimmt.

Die Bestimmung der Oberflächenrauigkeit Rₐ wurde jeweils vor und nach der Behandlung am entsprechenden Prüfkörper mit einem Digital-Makroskop Keyence VR-3200 mit der Messsoftware Version 2.5.0.236 durchgeführt. Hierzu wurde zunächst über verschiedene Belichtungseinstellungen wird ein 3D-Modell der betrachteten Oberfläche erstellt, aus dem die mittlere Linienrauigkeit Rₐ aus mehreren einzelnen Linien in Z-Orientierung berechnet wurde.

Die verwendetet Methode zur Bestimmung von Rₐ ist angelehnt an die Norm ISO4287 und ISO4288 mit der Filterung nach ISO11562 mit λc=2,5 mm und ohne λs (Rauschfilterung) mit einem Digital-Makroskop Keyence VR-3200 mit der Messsoftware Version 2.5.0.236 gemäß Herstellerangaben. Ergänzend wird hierzu auf das Benutzerhandbuch zu VR-3000 von Keyence (April 2016), und hier insbesondere die Kapitel 11 und 12 verwiesen. Für die Bestimmung war die Endeffekt-Korrektur aktiviert, der doppelte Gaussfilter war aus, die Anzahl der Messstrecken betrug 3 und die Anzahl der Profile 31. Die jeweiligen Bilder wurden mit der Mikrokamera 40x Zoom aufgenommen und mit einer geeigneten Software ausgewertet.

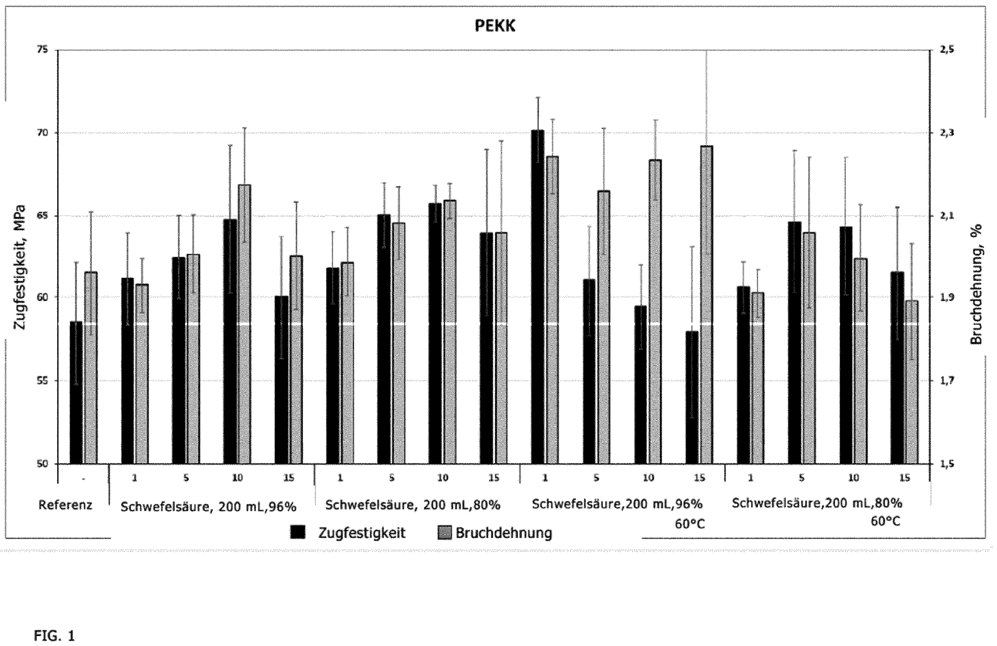

Die Entwicklung der mechanischen Eigenschaften (Zugfestigkeit und Bruchdehnung) für die verschiedenen Proben aus PEKK und die entsprechenden Behandlungsbedingungen im Vergleich zur Referenz (unbehandelte Probe) ist exemplarisch in Figur 1 gezeigt.

In Tabelle 2 und Tabelle 3 sind jeweils die relativen Veränderungen der Messwerte durch die Behandlung wiedergegeben. Die Angabe erfolgt dabei als einheitenloser Quotient des Messwerts nach Behandlung in Relation zum Messwert vor der Behandlung (für die Mittlere Linienrauigkeit Rₐ) bzw. in Relation zu den unbehandelten Referenz-Prüfkörpern (bei den Zug-Eigenschaften), gerundet auf zwei Nachkomma-Stellen. Dementsprechend bedeutet ein Messwert kleiner 1 eine Abnahme, ein Messwert größer 1 die Zunahme des jeweiligen Messwerts durch die Behandlung. Abweichungen 3-5% von liegen im Bereich der Standardabweichung.

**Tabelle 2: Bestimmte Eigenschaften für PEKK nach der Behandlung (Relativwerte)**

| **Lösemittel** | **Temperatur** | **Dauer** [min] | **E-Modul** | **Zugfestigkeit** | **Bruchdehnung** | **Rauigkeit** |
|---|---|---|---|---|---|---|
| H₂SO₄, 96% | RT | 1 | 1,06 | 1,04 | 0,99 | 0,46 |
| | | 5 | 1,03 | 1,07 | 1,06 | 0,41 |
| | | 10 | 1,02 | 1,11 | 1,11 | 0,60 |
| | | 15 | 0,99 | 1,03 | 1,02 | 0,46 |
| | 60°C | 1 | 1,06 | 1,20 | 1,14 | 0,36 |
| | | 5 | 0,95 | 1,04 | 1,10 | 0,63 |
| | | 10 | 0,90 | 1,02 | 1,14 | 0,85 |
| | | 15 | 0,87 | 0,99 | 1,16 | |
| H₂SO₄, 80% | RT | 1 | 1,04 | 1,06 | 1,02 | 0,79 |
| | | 5 | 1,06 | 1,11 | 1,06 | 0,36 |
| | | 10 | 1,04 | 1,12 | 1,09 | 0,37 |
| | | 15 | 1,04 | 1,09 | 1,05 | 0,54 |
| | 60°C | 1 | 1,04 | 1,04 | 0,97 | 0,50 |
| | | 5 | 1,06 | 1,10 | 1,05 | 0,40 |
| | | 10 | 1,08 | 1,10 | 1,02 | 0,27 |
| | | 15 | 1,06 | 1,05 | 0,96 | 0,30 |

**Tabelle 3: Ergebnisse PEKK-CF nach Behandlung (Relativwerte)**

| **Lösemittel** | **Temperatur** | **Dauer** [min] | **E-Modul** | **Zugfestigkeit** | **Bruchdehnung** | **Rauigkeit** |
|---|---|---|---|---|---|---|
| H₂SO₄, 96% | RT | 1 | 1,00 | 1,04 | 1,05 | 0,45 |
| | | 5 | 0,99 | 1,06 | 1,09 | 0,35 |
| | | 10 | 0,95 | 1,01 | 1,09 | 0,32 |
| | | 15 | 0,94 | 1,00 | 1,09 | 0,40 |
| H₂SO₄, 80% | RT | 1 | 0,98 | 1,02 | 1,03 | 0,96 |
| | | 5 | 1,00 | 0,98 | 1,00 | 0,81 |
| | | 10 | 1,00 | 0,99 | 1,05 | 0,97 |
| | | 15 | 0,99 | 0,97 | 1,00 | 1,08 |

Die Ergebnisse in Tabelle 2 und 3 zeigen für konzentrierte Schwefelsäure (96%) einen deutlichen Glättungseffekt, der auch mit einer Verbesserung der mechanischen Eigenschaften, insbesondere einer um etwa 10% erhöhten Bruchdehnung einhergeht. Da dieser Effekt im Wesentlichen unabhängig einer Veränderung des Zugmoduls erfolgt, wird vermutet, dass der Effekt auf den reduzierten Kerbeffekt durch die Glättung zurückzuführen ist.

Bei erhöhten Temperaturen ist für PEKK zusätzlich eine Veränderung des Zugmoduls zu beobachten, die auf eine Wirkung des Lösemittels auch im Bauteilinneren hindeutet.

Für die auf 80% verdünnte Schwefelsäure sind die vorteilhaften Effekte ebenfalls noch sichtbar, bedürfen aber teilweise einer längeren Einwirkdauer.

### Beispiel 3:

Zugstäbe gemäß DIN EN ISO 527-2, Typ 1BA, aus Polyetherimid-Pulver (PEI, basierend auf der Ultem 5000 Serie von Sabic) wurden mittels schichtweiser, regioselektiver Verfestigung auf einem modifizierten Lasersinter-System EOS P810 in XYZ-Orientierung gefertigt. Jeweils ein Prüfkörper wurde in je einem Lösemittel (Reinheit >99%) entsprechend Tabelle 4 für 180 Minuten bei Raumtemperatur und Umgebungsdruck eingelegt. Im Anschluss wurden die Prüfkörper mit Ethanol gewaschen und für mindestens 12 Stunden in Ethanol eingelegt, um Lösemittel-Reste aus den Bauteilen weitestgehend zu extrahieren. Anschließend wurden die Prüfkörper für mindestens 12 Stunden in einem Vakuumofen bei 120°C, unter Durchfluss von trockenem Stickstoff bei einem Absolutdruck von 220 bis 280mbar im System getrocknet.

Die einzelnen Zugstäbe wurden einer Zugprüfung gemäß DIN EN ISO 527-1 unterzogen. Zusätzlich wurde ein Satz von fünf unbehandelten Zugstäben als Referenz geprüft.

Nach erfolgter Zugprüfung wurden die Bauteile einer thermischen Differenzkalorimetrie gemäß DIN EN ISO 11357 unterzogen. Dazu wurde eine Probe von je etwa 5 mg aus dem Bauteil entnommen und mit einem Messsystem (DSC 823e, Mettler Toledo, Auswertung über "STARe Software", Version 16.30) unter Stickstoff 5.0 (Reinheit >99.999% Stickstoff) bewertet. Dazu wurde die jeweilige Probe zunächst für 5 Minuten bei 0°C konditioniert, und anschließend bei einer konstanten Heizrate von 20K/min auf 400°C erwärmt. Nach Konditionierung bei 400°C für 5 Minuten wurde die Probe mit einer Kühlrate von 20K/min auf 0°C abgekühlt und anschließend nach 5 Minuten Konditionierung bei dieser Temperatur nochmals mit konstanter Heizrate von 20K/min auf 400°C erwärmt. Aus DSC-Messungen wurden gemäß DIN EN ISO 11357 für verschiedene Proben die Glasübergangstemperatur Tg, der Schmelzpunkt Tm und die spezifische Schmelzenthalpie ΔHm bestimmt. In Tabelle 4 sind die entsprechend die ermittelten Größen des ersten Heizlaufs angegeben. Dabei entspricht der Glasübergang Tg dem Mittelpunkt der Stufe nach Norm, die Schmelztemperatur Tm entspricht dem Peak-Maximum des Schmelzpeaks, und die Schmelzenthalpie ΔHm beschreibt das auf die Probenmasse normalisierte Integral des Peaks.

**Tabelle 4:**

| **Lösemittel** | **Tg [°C]** | **Tm [°C]** | **ΔHm [J/g]** | **Kommentar** |
|---|---|---|---|---|
| Referenz | 224 | -- | -- | Bauteil transluzent |
| N,N'-Dimethylacetamid | 224 | -- | -- | Keine optische Veränderung |
| Tetrahydrofuran | 225 | 295 | 1,5 | Keine optische Veränderung |
| Dibrommethan | 223 | 282 | 8 | Bauteil opak, partielle Rissbildung an der Oberfläche |
| Dichlormethan | 223 | 281 | 17 | Bauteil opak, partiell Rissbildung an der Oberfläche |

Die Ergebnisse zeigen, dass geeignete Lösemittel eine Kristallisation induzieren können, wohingegen das erzeugte Bauteil aus dem Herstellungsprozess (Referenz) amorph vorliegt. Das Ergebnis und die Auswirkungen sind jedoch stark vom Lösemittel abhängig. Durch die erhöhte Kristallinität ist eine höhere mechanische Festigkeit (z.B. in Form eines erhöhten Zugmoduls) zu erwarten. Zudem ist durch die erhöhte Kristallinität (erhöhte Schmelzenthalpie) eine bessere Beständigkeit gegenüber der Einwirkung von Chemikalien zu erwarten.

Durch die Optimierung der Behandlungsbedingungen (z.B. Lösemittel, Einwirkart und -dauer) ist weiterhin eine Optimierung der gewünschten Eigenschaften zu erwarten, beispielsweise kann durch eine in der Tiefe begrenzte Kristallisation der Oberflächenschicht und (durch partielles Lösen bzw. Quellen) glattere Oberfläche eine verbesserte Chemikalienbeständigkeit erreicht werden, während eine Reduzierung der Bruchdehnung vermieden wird.

## Patentansprüche

1. Verfahren zur Behandlung eines nach einem additiven Fertigungsverfahren hergestellten dreidimensionalen Objekts, umfassend das In-Kontakt-Bringen des Objekts mit einem organischen oder anorganischen Lösungsmittel, wobei mindestens die Oberfläche des Objekts aus einem Polymer gebildet ist, dass eine Glasübergangstemperatur, gemessen gemäß DIN EN ISO 11357, von mindestens 120°C aufweist, wobei das Polymer ausgewählt ist aus Polyphenylensulfiden (PPS), Polyetherimiden (PEI), Polyimiden (PI), Polyamidimiden (PAI), Polyaryletherketonen (PAEK), bevorzugt Polyetheretherketonen (PEEK), Polyetherketonen (PEK), Polyetherketonketonen (PEKK), Polyetherketon-Polyetherdiphenyletherketon (PEK-PEDEK), Polyestern, Polyethern oder Polycarbonaten und das organische oder anorganische Lösungsmittel ausgewählt ist aus einer oder mehreren von konzentrierten und/oder verdünnten Mineralsäuren, konzentrierten organischen Säuren, und aprotischen organischen Lösungsmitteln.

2. Verfahren nach Anspruch 1, wobei das In-Kontakt-Bringen für einen Zeitraum erfolgt, der ausreichend ist um die Oberflächenrauigkeit Rₐ, bestimmt als Mittenrauwert nach DIN EN ISO 4287:2010, um mindestens 5% und bevorzugt mindestens 10% gegenüber der Oberflächenrauigkeit des Objekts vor der Behandlung zu reduzieren.

3. Verfahren nach Anspruch 1 oder 2, wobei das In-Kontakt-Bringen für einen Zeitraum erfolgt, der ausreichend ist um die Zugfestigkeit oder/oder die Bruchdehnung, bestimmt gemäß DIN ISO 527-1, um mindestens 5% und bevorzugt mindestens 10% gegenüber dem Objekt vor der Behandlung zu erhöhen und/oder den E-Modul um mindestens 5% gegenüber dem Objekt vor der Behandlung zu vermindern.

4. Verfahren nach einem der Ansprüche 1 bis 3, wobei das In-Kontakt-Bringen des Objekts durch Eintauchen des Objekts in das Lösungsmittel oder durch Bedampfen des Objekts erfolgt.

5. Verfahren nach einem der vorhergehenden Ansprüche, wobei das In-Kontakt-Bringen bei einer Temperatur im Bereich von 15°C bis 220°C, und bevorzugt 60°C bis 180°C erfolgt.

6. Verfahren nach einem der vorhergehenden Ansprüche, wobei das organische oder anorganische Lösungsmittel ausgewählt ist aus Schwefelsäure oder Salpetersäure, und aprotischen organischen Lösungsmitteln mit einem Hildebrand Löslichkeitsparameter δ im Bereich von 18 bis 24, bevorzugt ausgewählt aus der Gruppe umfassend THF, Dichlormethan, N-Methylpyrrolidon, und Dimethylacetamid.

7. Verfahren nach einem der vorhergehenden Ansprüche, wobei die Behandlung des dreidimensionalen Objekts in mehreren Stufen mit verschiedenen Lösemitteln erfolgt, besonders bevorzugt zur Glättung der Oberfläche mittels einer konzentrierten oder verdünnten Mineralsäure in einer ersten Stufe und Behandlung mit einem kristallisierend wirkenden organischen Lösemittel in einer anschließenden zweiten Stufe.

8. Verfahren nach einem der vorhergehenden Ansprüche, wobei das dreidimensionale Objekt nach der Behandlung mit dem organischen oder anorganischen Lösungsmittel mit Wasser und ggf. einem Wassermischbaren organischen Lösungsmittel mit einem Siedepunkt von unter 100°C gewaschen und anschließend getrocknet wird.

9. Verfahren zur Herstellung eines dreidimensionalen Objekts umfassend i) das Herstellen des dreidimensionalen Objekts durch selektives Verfestigen eines pulverförmigen Aufbaumaterials an den dem Querschnitt des dreidimensionalen Objekts in der jeweiligen Schicht entsprechenden Stellen durch Einwirkung von elektromagnetischer Strahlung, wobei als Aufbaumaterial ein Kunststoffpulver verwendet wird, das auf einem Polymer mit einer Glasübergangstemperatur von mindestens 120°C beruht, oder das Herstellen des dreidimensionalen Objekts aus einem Filament als Ausgangsmaterial, wobei geschmolzenes Filament eines solchen Polymers mit Hilfe einer Düse an die Stellen des späteren Objekts gesprüht wird, und ii) das anschließende Behandeln des Objekts durch In-Kontakt-Bringen des Objekts mit einem organischen oder anorganischen Lösungsmittel, wobei das dreidimensionales Objekt aus einem Polymer hergestellt wird, das ausgewählt ist aus Polyphenylensulfiden (PPS), Polyetherimiden (PEI), Polyimiden (PI), Polyamidimiden (PAI), Polyaryletherketonen (PAEK), bevorzugt Polyetheretherketonen (PEEK), Polyetherketonen (PEK), Polyetherketonketonen (PEKK), Polyetherketon-Polyetherdiphenyletherketon (PEK-PEDEK), Polyestern, Polyethern oder Polycarbonaten, und das organische oder anorganische Lösungsmittel ausgewählt ist aus einer oder mehreren von konzentrierten und/oder verdünnten Mineralsäuren, konzentrierten organischen Säuren, und aprotischen organischen Lösungsmitteln.

10. Dreidimensionales Objekt, hergestellt nach einem Verfahren gemäß einem der Ansprüche 1 bis 9.

11. Dreidimensionales Objekt nach Anspruch 10, wobei das Objekt eine Oberflächenrauigkeit Rₐ, bestimmt als Mittenrauwert nach DIN EN ISO 4287:2010, von weniger als weniger als 20 µm, bevorzugt weniger als 15 µm und besonders bevorzugt weniger als 10 µm aufweist.

12. Verwendung einer Behandlung, bei der ein über ein additives Fertigungsverfahren hergestelltes dreidimensionales Objekt mit einem organischen oder anorganischen Lösungsmittel in Kontakt gebracht wird, zur Reduzierung der Oberflächenrauigkeit und/oder des E-Moduls und/oder zur Erhöhung der Zugfestigkeit oder/oder der Bruchdehnung des Objekts und/oder zur Erhöhung der Chemikalienbeständigkeit, wobei das Objekt bevorzugt eine aus einem Polymer mit einer Glasübergangstemperatur von mindestens 120°C gebildete Oberfläche aufweist, wobei das dreidimensionales Objekt aus einem Polymer gebildet ist, das ausgewählt ist aus Polyphenylensulfiden (PPS), Polyetherimiden (PEI), Polyimiden (PI), Polyamidimiden (PAI), Polyaryletherketonen (PAEK), bevorzugt Polyetheretherketonen (PEEK), Polyetherketonen (PEK), Polyetherketonketonen (PEKK), Polyetherketon-Polyetherdiphenyletherketon (PEK-PEDEK), Polyestern, Polyethern oder Polycarbonaten, und das organische oder anorganische Lösungsmittel ausgewählt ist aus einer oder mehreren von konzentrierten und/oder verdünnten Mineralsäuren, konzentrierten organischen Säuren, und aprotischen organischen Lösungsmitteln.

## Claims

1. Method for the treatment of a three-dimensional object produced according to an additive manufacturing method, comprising bringing the object into contact with an organic or inorganic solvent, wherein at least one surface of the object is formed from a polymer having a glass transition temperature, measured according to DIN EN ISO 11357, of at least 120°C, wherein the polymer is selected from polyphenylene sulfides (PPS), polyether imides (PEI), polyimides (PI), polyamide imides (PAI), polyaryl ether ketones (PAEK), preferably polyether ether ketones (PEEK), polyether ketone-polyether diphenyl ether ketone (PEK-PEDEK), polyesters, polyethers, or polycarbonates and the organic or inorganic solvent is selected from one or more of concentrated and/or diluted mineral acids, concentrated organic acids, and aprotic organic solvents.

2. Method as claimed in claim 1, wherein the bringing into contact takes place for a period of time which is sufficient to reduce the surface roughness Rₐ, defined as the average roughness value according to DIN EN ISO 4287:2010, by at least 5% and preferably at least 10% in relation to the surface roughness of the object before the treatment.

3. Method as claimed in claim 1 or 2, wherein the bringing into contact takes place for a period of time which is sufficient to increase the tensile strength and/or the elongation of fracture, determined according to DIN ISO 527-1, by at least 5% and preferably at least 10% in relation to the object before the treatment and/or to reduce the modulus of elasticity by at least 5% in relation to the object before the treatment.

4. Method as claimed in any one of claims 1 to 3, wherein the bringing into contact of the object is carried out by immersing the object in the solvent or by vapor deposition of the object.

5. Method as claimed in any one of the preceding claims, wherein the bringing into contact takes place at a temperature in the range of 15°C to 220°C, and preferably 60°C to 180°C.

6. Method as claimed in any one of the preceding claims, wherein the organic or inorganic solvent is selected from sulfuric acid or nitric acid, and aprotic organic solvents having a Hildebrand solubility parameter δ in the range of 18 to 24, preferably selected from the group comprising THF, dichloromethane, N-methyl pyrrolidone, and dimethyl acetamide.

7. Method as claimed in any one of the preceding claims, wherein the treatment of the three-dimensional object takes place in multiple steps using various solvents, particularly preferably for smoothing the surface by means of a concentrated or diluted mineral acid in a first step and treatment using an organic solvent having a crystallizing effect in a following second step.

8. Method as claimed in any one of the preceding claims, wherein the three-dimensional object is washed, after the treatment using the organic or inorganic solvent, using water and optionally a water-miscible organic solvent having a boiling point of less than 100°C and subsequently dried.

9. Method for producing a three-dimensional object comprising i) producing the three-dimensional object by selectively solidifying a powdered construction material at points corresponding to the cross-section of the three-dimensional object in the respective layer by the action of electromagnetic radiation, wherein a plastic powder is used as construction material, which is based on a polymer having a glass transition temperature of at least 120°C, or producing the three-dimensional object from a filament as starting material, wherein molten filament of such a polymer is sprayed with the aid of a nozzle at the points of the later object, and ii) subsequently treating the object by bringing the object into contact with an organic or inorganic solvent, wherein the three-dimensional object is produced from a polymer selected from polyphenylene sulfides (PPS), polyether imides (PEI), polyimides (PI), polyamide imides (PAI), polyaryl ether ketones (PAEK), preferably polyether ether ketones (PEEK), polyether ketones (PEK), polyether ketone ketones (PEKK), polyether ketone-polyether diphenyl ether ketone (PEK-PEDEK), polyesters, polyethers, or polycarbonates and the organic or inorganic solvent is selected from one or more of concentrated and/or diluted mineral acids, concentrated organic acids, and aprotic organic solvents.

10. Three-dimensional object produced according to a method as claimed in any one of claims 1 to 9.

11. Three-dimensional object as claimed in claim 10, wherein the object has a surface roughness Rₐ, determined as mean roughness value according to DIN EN ISO 4287:2010, of less than 20 µm, preferably less than 15 µm, and particularly preferably less than 10 µm.

12. Use of a treatment, in which a three-dimensional object produced via an additive manufacturing method is brought into contact with an organic or inorganic solvent, for reducing the surface roughness and/or the modulus of elasticity and/or for increasing the tensile strength and/or the elongation of fracture of the object and/or for increasing the chemical resistance, wherein the object preferably has a surface formed from a polymer having a glass transition temperature of at least 120°C, wherein the three-dimensional object is formed from a polymer selected from polyphenylene sulfides (PPS), polyether imides (PEI), polyimides (PI), polyamide imides (PAI), polyaryl ether ketones (PAEK), preferably polyether ether ketones (PEEK), polyether ketones (PEK), polyether ketone ketones (PEKK), polyether ketone-polyether diphenyl ether ketone (PEK-PEDEK), polyesters, polyethers, or polycarbonates and the organic or inorganic solvent is selected from one or more of concentrated and/or diluted mineral acids, concentrated organic acids, and aprotic organic solvents.

## Revendications

1. Procédé pour le traitement d'un objet en trois dimensions fabriqué par un procédé de fabrication par ajout de matière, comprenant la mise en contact de l'objet avec un solvant organique ou inorganique, dans lequel la surface de l'objet, au moins, est faite d'un polymère présentant une température de transition vitreuse, mesurée selon DIN EN ISO 11357, d'au moins 120 °C, dans lequel le polymère est choisi parmi des sulfures de polyphénylène (PPS), des polyétherimides (PEI), des polyimides (PI), des polyamide-imides (PAI), des polyaryléthercétones (PAEK), de préférence des polyétheréthercétones (PEEK), des polyéthercétones (PEK), des polyéthercétone-cétones (PEKK), la polyéthercétone-polyétherdiphényléthercétone (PEK-PEDEK), des polyesters, des polyéthers ou des polycarbonates et le solvant organique ou inorganique est choisi parmi un ou plusieurs acides minéraux concentrées et/ou dilués, des acides organiques concentrés et des solvants organiques aprotiques.

2. Procédé selon la revendication 1, dans lequel la mise en contact a lieu pendant une durée suffisante pour réduire la rugosité de surface Rₐ, déterminée comme la rugosité médiane selon DIN EN ISO 4287:2010, d'au moins 5 % et, de préférence, d'au moins 10 % par rapport à la rugosité de surface de l'objet avant le traitement.

3. Procédé selon la revendication 1 ou 2, dans lequel la mise en contact a lieu pendant une durée suffisante pour accroître la résistance à la traction ou/ou l'allongement à la rupture, déterminés selon DIN ISO 527-1, d'au moins 5 % et, de préférence, d'au moins 10 % par rapport à l'objet avant le traitement et/ou pour réduire le module d'élasticité d'au moins 5 % par rapport à l'objet avant le traitement.

4. Procédé selon l'une des revendications 1 à 3, dans lequel la mise en contact de l'objet a lieu par immersion de l'objet dans le solvant ou par exposition de l'objet à une vapeur.

5. Procédé selon l'une des revendications précédentes, dans lequel la mise en contact a lieu à une température comprise entre 15 °C et 220 °C, de préférence entre 60 °C et 180 °C.

6. Procédé selon l'une des revendications précédentes, dans lequel le solvant organique ou inorganique est choisi parmi l'acide sulfurique ou l'acide nitreux et des solvants organiques aprotiques ayant un paramètre de solubilité de Hildebrand δ compris entre 18 et 24, choisis de préférence parmi le groupe comprenant le THF, le dichlorométhane, la N-méthylpyrrolidone et le diméthylacétamide.

7. Procédé selon l'une des revendications précédentes, dans lequel le traitement de l'objet à trois dimensions est effectué en plusieurs étapes avec différents solvants, de préférence pour lisser la surface au moyen d'un acide minéral concentré ou dilué dans une première étape, puis par traitement avec un solvant organique ayant un effet cristallisant dans une deuxième étape.

8. Procédé selon l'une des revendications précédentes dans lequel, après le traitement avec le solvant organique ou inorganique, l'objet à trois dimensions est lavé avec de l'eau et éventuellement avec un solvant organique miscible avec l'eau ayant un point d'ébullition inférieur à 100 °C, puis séché.

9. Procédé pour la fabrication d'un objet à trois dimensions comprenant i) la fabrication de l'objet à trois dimensions par solidification sélective d'un matériau en poudre déposé aux endroits correspondant à la section de l'objet à trois dimensions de chaque couche par l'action de rayonnement électromagnétique, le matériau déposé utilisé étant une poudre de matière plastique à base d'un polymère ayant une température de transition vitreuse d'au moins 120 °C, ou la fabrication de l'objet à trois dimensions à partir d'un filament servant de matière première, un filament fondu d'un tel polymère étant projeté à l'aide d'une buse aux endroits du futur objet, puis ii) le traitement de l'objet par sa mise en contact avec un solvant organique ou inorganique, l'objet à trois dimensions étant fabriqué à partir d'un polymère choisi parmi des sulfures de polyphénylène (PPS), des polyétherimides (PEI), des polyimides (PI), des polyamide-imides (PAI), des polyaryléthercétones (PAEK), de préférence des polyétheréthercétones (PEEK), des polyéthercétones (PEK), des polyéthercétone-cétones (PEKK), la polyéthercétone-polyétherdiphényléthercétone (PEK-PEDEK), des polyesters, des polyéthers ou des polycarbonates et le solvant organique ou inorganique étant choisi parmi un ou plusieurs acides minéraux concentrées et/ou dilués, des acides organiques concentrés et des solvants organiques aprotiques.

10. Objet à trois dimensions fabriqué par un procédé selon l'une des revendications 1 à 9.

11. Objet à trois dimensions selon la revendication 10, lequel objet présente une rugosité de surface Rₐ, déterminée comme la rugosité médiane selon DIN EN ISO 4287:2010, de moins de 20 µm, de préférence de moins de 15 µm, en particulier de moins de 10 µm.

12. Utilisation d'un traitement dans lequel un objet à trois dimensions fabriqué par un procédé de fabrication par ajout de matière est mis en contact avec un solvant organique ou inorganique afin de réduire la rugosité de surface et/ou le module d'élasticité et/ou d'accroître la résistance à la traction ou/ou l'allongement à la rupture de l'objet et/ou pour accroître la résistance aux agents chimiques, dans lequel l'objet présente de préférence une surface formée d'un polymère ayant une température de transition vitreuse d'au moins 120 °C, dans lequel l'objet à trois dimensions est fait d'un polymère choisi parmi des sulfures de polyphénylène (PPS), des polyétherimides (PEI), des polyimides (PI), des polyamide-imides (PAI), des polyaryléthercétones (PAEK), de préférence des polyétheréthercétones (PEEK), des polyéthercétones (PEK), des polyéthercétone-cétones (PEKK), la polyéthercétone-polyétherdiphényléthercétone (PEK-PEDEK), des polyesters, des polyéthers ou des polycarbonates et le solvant organique ou inorganique est choisi parmi un ou plusieurs acides minéraux concentrées et/ou dilués, des acides organiques concentrés et des solvants organiques aprotiques.
